# EUROPÄISCHE PATENTANMELDUNG

(11) **EP 3 696 010 A1**
(43) Veröffentlichungstag der Anmeldung: **19.08.2020**
(21) Anmeldenummer: 19156589.4
(22) Anmeldetag: 12.02.2019
(51) Int. Cl.: B60L 53/16, B60L 53/66

(54) **LADESTECKER ZUM LADEN EINES STROMSPEICHERS, SYSTEM MIT EINEM LADESTECKER UND VERFAHREN ZUM VERARBEITEN VON ELEKTRISCHEN GRÖSSEN FÜR EINEN LADESTECKER**

(71) Anmelder: Siemens Aktiengesellschaft, 80333 München (DE)
(72) Erfinder: Linzmaier, Klaus-Peter, 73650 Winterbach (DE)

(57) **Zusammenfassung**

Es wird ein Ladestecker zum Laden eines Stromspeichers eines elektrisch antreibbaren Fortbewegungsmittels vorgeschlagen, wobei der Ladestecker mittels eines elektrische Leistungsleitungen und elektrische Messleitungen umfassenden Ladekabels mit einer Ladeinfrastruktur verbindbar ist, wobei der Ladestecker umfasst:
eine Schaltungsanordnung, welche elektrische Eingangskontakte und elektrische Ausgangskontakte umfasst, wobei die elektrischen Eingangskontakte mit den elektrischen Leistungsleitungen und die elektrischen Ausgangskontakte mit den elektrischen Messleitungen elektrisch verbunden sind, und
eine zwischen den elektrischen Eingangskontakten und den elektrischen Ausgangskontakten geschaltete Schutzimpedanzvorrichtung zur Bereitstellung einer Schutzimpedanz, welche dazu eingerichtet ist, eine an den elektrischen Eingangskontakten vorliegende erste elektrische Größe mittels der bereitgestellten Schutzimpedanz in eine verringerte zweite elektrische Größe an den elektrischen Ausgangskontakten zu wandeln.

Durch die bereitgestellte Schutzimpedanz wird der Ableitstrom, der im Fehlerfall als Berührstrom zu einer Personengefährdung führen kann, direkt in dem Ladestecker begrenzt.

## Beschreibung

Die vorliegende Erfindung betrifft einen Ladestecker zum Laden eines Stromspeichers eines elektrisch antreibbaren Fortbewegungsmittels, ein System mit dem Ladestecker sowie ein Verfahren und ein Computerprogrammprodukt zum Verarbeiten von elektrischen Größen für den Ladestecker.

Elektrofahrzeuge und auch zumindest teilweise mit elektrischer Energie angetriebene Kraftfahrzeuge weisen mindestens einen Akkumulator auf, welcher in einem laufenden Betrieb des Elektrofahrzeugs bzw. des Kraftfahrzeugs regelmäßig zu laden ist. Ein Aufladen des Elektrofahrzeugs erfolgt an einer Ladeinfrastruktur, welche auch als "Electric Vehicle Supply Equipment" (EVSE) bekannt ist, die über ein Ladekabel mit dem Elektrofahrzeug verbunden wird.

Eine insbesondere in der Ladeinfrastruktur vorgesehene oder dieser zugeordnete eichrechtskonforme Messvorrichtung dient einer Erfassung der von der Ladeinfrastruktur an das Elektrofahrzeug übergebenen elektrischen Energie. Diese übergebene elektrische Energie wird dem Fahrzeughalter üblicherweise in Rechnung gestellt.

Der Grundgedanke des Eichrechts ist elektrische Energie am Übergabepunkt, nämlich dort, wo die elektrische Energie die Anlagen der einen Partei verlässt und in die Anlagen der anderen Partei übergeht, zu messen. Somit ist der Übergabepunkt insbesondere bei den meisten Gleichstrom- und einigen Wechselstrom-Ladeinfrastrukturen nach dem Stand der Technik am Ende eines Kabels, nämlich im dort vorhandenen Ladestecker. Jedoch ist eine Anordnung der Messvorrichtung in dem Ladestecker aufgrund der Größe und des Gewichts der Messvorrichtung unpraktikabel.

Es stellt sich also die technische Herausforderung in eichrechtskonformer Weise, also insbesondere nachweisbar und nicht abstreitbar, die Menge der an einem Übergabepunkt gelieferten elektrischen Energie durch Messung an einem anderen Punkt zu bestimmen, wobei die Betriebssicherheit des Ladesystems erhalten bleiben soll und eine Kompatibilität zu diversen teilweisen internationalen Standards wünschenswert ist.

Aus eichrechtlicher Sicht ergibt sich hier die Problematik, dass durch den Spannungsabfall in dem Ladekabel die am Ladestecker abgegebene elektrische Leistung geringer ist als die an der Ladeinfrastruktur über das Ladekabel Eingespeiste. Im Ladekabel verbleiben dabei Verluste, die dem Kunden nicht verrechnet werden dürfen.

Zur Behebung der Problematik ist aus dem Stand der Technik bekannt, wie mittels einer sogenannten Vierleitermessung Spannungsabfälle auf einem Paar von stromführenden Leitungen (Leistungsleitungen) mit vernachlässigbarem Messfehler aus einer Messung eliminiert werden können. Hierzu wird ein weiteres Leitungspaar (Messleitungen) direkt an den elektrischen Kontakten des Übergabepunktes angeschlossen, um die dort anliegende Spannung hochohmig, und deshalb ohne Spannungsabfall auf der Messleitung, zu erfassen.

Dies bedeutet für den praktischen Anwendungsfall, dass die Leistungsleitungen aufgrund der hohen verwendeten Ladespannungen herkömmlicherweise mit doppelter Isolation bezogen auf die Bemessungsspannung von bis zu 1000V (Volt) ausgeführt werden. Hierbei werden die zusätzlichen Messleitungen hinsichtlich der Spannungsfestigkeit, der Schirmung und der Kurzschlussfestigkeit ebenfalls entsprechend den erhöhten Anforderungen der obigen Leistungsleitungen ausgeführt. Da die Spannungsmessung zur Reduzierung von Messfehlern hochohmig erfolgt, ist somit eine störsichere Ausführung der Messleitungen mit diesen erhöhten Anforderungen schwierig und kostenintensiv zu realisieren.

Vor diesem Hintergrund besteht eine Aufgabe der vorliegenden Erfindung darin, eine verbesserte eichrechtskonforme Messung zu ermöglichen.

Gemäß einem ersten Aspekt wird ein Ladestecker zum Laden eines Stromspeichers eines elektrisch antreibbaren Fortbewegungsmittels vorgeschlagen, wobei der Ladestecker mittels eines elektrische Leistungsleitungen und elektrische Messleitungen umfassenden Ladekabels mit einer Ladeinfrastruktur verbindbar ist, wobei der Ladestecker umfasst:
eine Schaltungsanordnung, welche elektrische Eingangskontakte und elektrische Ausgangskontakte umfasst, wobei die elektrischen Eingangskontakte mit den elektrischen Leistungsleitungen und die elektrischen Ausgangskontakte mit den elektrischen Messleitungen elektrisch verbunden sind, und
eine zwischen den Eingangskontakten und den Ausgangskontakten geschaltete Schutzimpedanzvorrichtung zur Bereitstellung einer Schutzimpedanz, welche dazu eingerichtet ist, eine an den Eingangskontakten vorliegende erste elektrische Größe mittels der bereitgestellten Schutzimpedanz in eine verringerte zweite elektrische Größe an den Ausgangskontakten zu wandeln.

Durch die bereitgestellte Schutzimpedanz wird der Ableitstrom, der im Fehlerfall, wie beispielsweise einer Schutzleiterunterbrechung, als Berührstrom zu einer Personengefährdung führen kann, direkt in dem Ladestecker begrenzt.

Dies ist deshalb vorteilhaft, da der Ableitstrom anstatt in einer Ladeinfrastruktur bereits an einem Übergang zwischen den Leistungsleitungen und den Messleitungen, nämlich durch die Schutzimpedanzvorrichtung innerhalb des Ladesteckers, begrenzt wird.

Dadurch ist es möglich, die Messsignale für eine Spannungsmessung zur Eliminierung des Spannungsabfalls der elektrischen Leistungsleitung an den elektrischen Ausgangskontakten über Messleitungen innerhalb des Ladekabels zu der Ladeinfrastruktur zu übertragen. Hierbei werden an die Messleitungen weder erhöhte Anforderungen an deren Spannungsfestigkeit, Kurzschlussfestigkeit, Schirmung und Isolation gestellt, noch ist es erforderlich, einen Querschnitt der Messleitungen an einen erhöhten Querschnitt der Leistungsleitungen anzupassen.

Dies senkt die Kosten für die Herstellung des Ladekabels, da die Messleitungen nicht den erhöhten Anforderungen der Leistungsleitungen hinsichtlich deren Spannungsfestigkeit, Kurzschlussfestigkeit, Schirmung und Isolation gerecht werden müssen, sondern als einfache Signaladern ausgeführt werden können. Durch die Anforderungsreduktion hinsichtlich der verwendeten einfachen Messleitungen kann somit eine wirtschaftliche und eichrechtskonforme Messung durchgeführt werden.

Für Ladestecker zum Laden von elektrisch antreibbaren Fortbewegungsmittel gibt es insbesondere verschiedene Ladestandards und Ladestecker-Typen, die in verschiedenen räumlichen Zonen der Erde verwendet werden. Der Ladestecker ist vorzugsweise als ein Typ 1-Ladestecker (amerikanischer Raum), als ein Typ 2-Ladestecker (europäischer Raum), als ein Combo-Stecker (CCS; Combined Charging System) (europäischer Raum) oder als ein CHAdeMO-Ladestecker (japanischer und europäischer Raum) zum Laden eines Stromspeichers eines elektrisch antreibbaren Fortbewegungsmittels ausgebildet.

Der Stromspeicher ist beispielsweise als ein Energiespeicher zum Speichern von elektrischer Energie ausgebildet. Ein Energiespeicher ist vorzugsweise ein Akkumulator. Ein Akkumulator umfasst insbesondere verschiedene Typen, wie einen Lithium-Ionen-, einen Lithium-Eisenphosphat-, einen Lithium-Polymer-, einen Nickel-Cadmium-, einen Nickel-Metallhybrid- oder einen Blei-Akkumulator.

Das elektrisch antreibbare Fortbewegungsmittel ist insbesondere ein Kraftfahrzeug, vorzugsweise ein Personenkraftwagen (PKW) oder ein Lastkraftwagen (LKW), welches mit elektrischer Energie angetrieben wird. Elektrisch antreibbare Fortbewegungsmittel umfassen beispielsweise Elektrofahrzeuge sowie Hybridfahrzeuge.

Das Ladekabel umfasst insbesondere elektrische Leistungsleitungen. Elektrische Leistungsleitungen sind vorzugsweise stromführende Leitungen, über welche ein ausreichend hoher Strom fließen kann, um den Akkumulator des elektrisch antreibbare Fortbewegungsmittels aufzuladen. Beispielsweise handelt es sich bei den elektrischen Leistungsleitungen um ein Paar von elektrischen Leistungsleitungen, welche einen ersten differentiellen Leiter (L+) und einen zweiten differentiellen Leiter (L-) umfassen. Die Verwendung von differentiellen Leitern (L+, L-) wird beispielsweise bei einem Gleichstromladeverfahren zum Laden des Akkumulators angewendet. Weiterhin können die elektrischen Leistungsleitungen im Falle eines Ladens des Akkumulators mittels eines Drehstromladeverfahrens drei elektrische Leistungsleitungen umfassen, nämlich L1, L2 und L3. Im Falle des CCS-Ladesteckers umfasst beispielsweise das Ladekabel sowohl die beiden differentiellen Leiter (L+, L-) als auch die drei elektrischen Leistungsleitungen (L1, L2, L3).

Ferner weist das Ladekabel insbesondere elektrische Messleitungen auf. Elektrische Messleitungen sind vorzugsweise Kommunikations- und Messleitungen, an die sehr geringe Anforderungen hinsichtlich einer Strombelastbarkeit, Spannungsfestigkeit und/oder Isolation gestellt werden, da diese zur Messung von verschiedenen Größen in dem Ladestecker und zur Kommunikation des Ladesteckers mit der Ladeinfrastruktur verwendet werden. Beispielsweise handelt es sich bei den elektrischen Messleitungen um ein Paar von elektrischen Messleitungen, welche mit den elektrischen Ausgangskontakten der Schaltungsanordnung innerhalb des Ladesteckers verbunden werden und mittels welcher eine elektrische Spannung an den elektrischen Ausgangskontakten der Schaltungsanordnung gemessen werden kann.

Zusätzlich umfasst das Ladekabel insbesondere einen Neutralleiter, einen Schutzleiter, eine CP-Signalleitung (Control Pilot) und eine PP-Signalleitung (Proximity Pilot). Weitere das Ladekabel umfassende Leitungen oder Leiter sind in Abhängigkeit des verwendeten Ladestecker-Typs denkbar.

Vorzugsweise ragen alle Leitungen des Ladekabels in ein Inneres des Ladesteckers hinein und werden dort beispielsweise mittels der Schaltungsanordnung und/oder einer anderen Anordnung von elektrischen Bauelementen und elektrischen Leitern weiter verteilt.

Die Schaltungsanordnung ist insbesondere als eine Leiterplatte ausgebildet. Die Leiterplatte ist vorzugsweise als ein Träger für elektrische Bauelemente ausgebildet. Die Leiterplatte dient einerseits der mechanischen Befestigung und andererseits der elektrischen Verbindung der elektrischen Bauelemente. Beispielsweise umfasst der Ladestecker zumindest eine oder mehrere Leiterplatten, welche gleich oder unterschiedlich groß ausgebildet sein können und welche unterschiedliche Schaltungen aufweisen können.

Zusätzlich umfasst die Leiterplatte insbesondere elektrische Eingangskontakte und elektrische Ausgangskontakte. Vorzugsweise sind die elektrischen Eingangskontakte und die elektrischen Ausgangskontakte als elektrische Klemmen auf der Leiterplatte ausgebildet. Diese können beispielsweise durch Lot auf der Leiterplatte angebracht werden.

Die Schaltungsanordnung kann ferner als eine Anordnung von elektrischen Bauelementen und elektrischen Leitungen ausgebildet sein, bei welcher die elektrischen Eingangskontakte mit den elektrischen Leistungsleitungen und die elektrischen Ausgangskontakte mit den elektrischen Messleitungen elektrisch ohne Verwendung einer Leiterplatte verbunden sind. Die Schutzimpedanzvorrichtung kann innerhalb der Schaltungsanordnung derart ausgebildet sein, dass diese zwischen den elektrischen Eingangskontakten und den elektrischen Ausgangskontakten ohne Verwendung der Leiterplatte bereitgestellt wird.

Der zulässige Berührstrom, welcher schaltungstechnisch beispielsweise mittels einer Impedanz, insbesondere der Schutzimpedanzvorrichtung, begrenzt wird, ist in der DIN EN 61851-1 definiert. Die Kommunikationsleitungen und die Messleitungen innerhalb des Ladekabels gelten insbesondere als berührbar und sind somit innerhalb des Ladekabels vorzugweise von den stromführenden Leistungsleitungen mittels Isolation physisch zu trennen. Um festzustellen, ob der Berührstrom in dem Ladesystem auf einen zulässigen Wert begrenzt wurde, werden die Messleitungen gegen eine Schutzerdung kurzgeschlossen und nachfolgend ein Kurzschlussstrom gemessen. Mittels der DIN EN 61851-1 wird anschließend bewertet, ob der gemessene Kurzschlussstrom einen unzulässigen Wert erreicht hat.

Beispielsweise weist die Schutzimpedanzvorrichtung einen betragsmäßigen Impedanzwert Z von 400 Kilo-Ohm auf, während die stromführenden Leistungsleitungen an eine Versorgungsspannung U von +400V angeschlossen sind. Hierbei ist insbesondere im Kurschlussfall der Berührstrom I nach Formel I = U / Z = 400V / 400 Kilo-Ohm = 1mA. Dieser ist nach Tabelle 6 - Grenzwerte des Berührungsstroms - der DIN EN 61851-1 in Schutzklasse 1 zulässig.

Gemäß einer Ausführungsform sind die erste elektrische Größe und die verringerte zweite elektrische Größe als elektrische Spannungen ausgebildet.

Insbesondere wird durch die Schutzimpedanzvorrichtung der Spannungswert an den elektrischen Eingangskontakten, nämlich die erste elektrische Größe, in die verringerte zweite elektrische Größe, also eine elektrische Spannung, gewandelt.

Gemäß einer weiteren Ausführungsform ist die Schutzimpedanzvorrichtung als ein erster ohmscher-kapazitiver Spannungsteiler ausgebildet, welcher eine erste Parallelschaltung eines ersten elektrischen Widerstands und eines ersten elektrischen Kondensators, eine zweite Parallelschaltung eines zweiten elektrischen Widerstands und eines zweiten elektrischen Kondensators und eine dritte Parallelschaltung eines dritten elektrischen Widerstands und eines dritten elektrischen Kondensators umfasst, wobei die erste Parallelschaltung in Reihe zu der zweiten Parallelschaltung angeordnet ist und die zweite Parallelschaltung in Reihe zu der dritten Parallelschaltung angeordnet ist.

Der erste ohmsche-kapazitive Spannungsteiler ist insbesondere zusätzlich als ein differentieller Spannungsteiler ausgebildet. Hierbei weist der differentielle Spannungsteiler vorzugsweise den ersten und den zweiten differentiellen Leiter und den ersten ohmschen-kapazitiven Spannungsteiler auf. Der erste ohmsche-kapazitive Spannungsteiler verringert beispielsweise die Versorgungspannung, welche zumindest an einem der beiden differentiellen Leiter anliegt und wandelt die Versorgungsspannung in eine verringerte Versorgungsspannung um, welche an den ersten und zweiten elektrischen Ausgangskontakten bereitgestellt wird.

Die elektrischen Widerstände und die elektrischen Kondensatoren des ohmschen-kapazitiven Spannungsteilers, insbesondere der Schutzimpedanzvorrichtung, werden insbesondere derart ausgebildet, dass die Spannungsfestigkeit jedes einzelnen elektrischen Widerstandes und jedes einzelnen elektrischen Kondensators so ausgelegt ist, dass an keinem der elektrischen Widerstände und elektrischen Kondensatoren eine elektrische Spannung auftritt, für die der elektrische Widerstand oder der elektrische Kondensator nicht ausgeführt ist. Die elektrischen Widerstände und die elektrischen Kondensatoren der Schutzimpedanz sind weiterhin insbesondere als passive elektrische Bauelemente ausgebildet.

Vorzugsweise sind die Widerstandswerte und die Kapazitätswerte der elektrischen Widerstände und der elektrischen Kondensatoren in der ersten, zweiten und dritten Parallelschaltung gleich. Auch können die Widerstandswerte und die Kapazitätswerte in der ersten, zweiten und dritten Parallelschaltung unterschiedlich sein.

Um insbesondere zeitliche Messungenauigkeiten und Resonanzen von parasitären Schaltungselementen in zumindest der Schaltungsanordnung in dem Ladestecker bei der Spannungsmessung zu verhindern und/oder zu kompensieren, ist die Schutzimpedanzvorrichtung beispielsweise als ohmscher-kapazitiver Spannungsteiler ausgebildet.

Gemäß einer weiteren Ausführungsform ist die erste Parallelschaltung zwischen einem ersten elektrischen Eingangskontakt der elektrischen Eingangskontakte und einem ersten elektrischen Ausgangskontakt der elektrischen Ausgangskontakte elektrisch gekoppelt, ist die zweite Parallelschaltung zwischen dem ersten elektrischen Ausgangskontakt der elektrischen Ausgangskontakte und einem zweiten elektrischen Ausgangskontakt der elektrischen Ausgangskontakte elektrisch gekoppelt und ist die dritte Parallelschaltung zwischen einem zweiten elektrischen Eingangskontakt der elektrischen Eingangskontakte und dem zweiten elektrischen Ausgangskontakt der elektrischen Ausgangskontakte elektrisch gekoppelt.

Insbesondere umfassen die elektrischen Eingangskontakte zumindest zwei elektrische Eingangskontakte, wovon der erste elektrische Eingangskontakt mit dem ersten differentiellen Leiter (L+) direkt in der Schaltungsanordnung mittels einer elektrischen Klemme oder über eine weitere Leitung verbunden ist. Der zweite elektrische Eingangskontakt ist insbesondere mit dem zweiten differentiellen Leiter (L-) direkt in der Schaltungsanordnung mittels einer elektrischen Klemme oder über eine weitere Leitung verbunden. Vorzugsweise umfassen die elektrischen Ausgangskontakte zumindest zwei elektrische Ausgangskontakte, wovon der erste als auch der zweite elektrische Ausgangskontakt direkt in der Schaltungsanordnung mittels einer elektrischen Klemme oder über eine weitere Leitung verbunden sind. An dem ersten und zweiten elektrischen Ausgangskontakt kann eine elektrische Größe, wie eine elektrische Spannung, gemessen werden.

Vorzugsweise ist die erste Parallelschaltung an einem Eingang mit dem ersten elektrischen Eingangskontakt und an einem Ausgang mit dem ersten elektrischen Ausgangskontakt elektrisch verbunden. Beispielsweise ist die zweite Parallelschaltung an einem Eingang mit dem ersten elektrischen Ausgangskontakt und an einem Ausgang mit dem zweiten elektrischen Ausgangskontakt elektrisch verbunden. Vorzugsweise ist die dritte Parallelschaltung an einem Eingang mit dem zweiten elektrischen Ausgangskontakt und an einem Ausgang mit dem zweiten elektrischen Eingangskontakt elektrisch verbunden.

Gemäß einer weiteren Ausführungsform ist die Schutzimpedanzvorrichtung als ein zweiter ohmscher-kapazitiver Spannungsteiler ausgebildet, welcher eine erste Parallelschaltung eines ersten elektrischen Widerstands und eines ersten elektrischen Kondensators, eine zweite Parallelschaltung eines zweiten elektrischen Widerstands und eines zweiten elektrischen Kondensators, eine vierte Parallelschaltung eines vierten elektrischen Widerstands und eines vierten elektrischen Kondensators und eine fünfte Parallelschaltung eines fünften elektrischen Widerstands und eines fünften elektrischen Kondensators umfasst, wobei die erste Parallelschaltung in Reihe zu der zweiten Parallelschaltung angeordnet ist und die vierte Parallelschaltung in Reihe zu der fünften Parallelschaltung angeordnet ist.

Gemäß einer weiteren Ausführungsform ist die erste Parallelschaltung mit einem ersten elektrischen Eingangskontakt der elektrischen Eingangskontakte und die zweite Parallelschaltung mit einem ersten elektrischen Ausgangskontakt der elektrischen Ausgangskontakte elektrisch gekoppelt, wobei die vierte Parallelschaltung mit einem zweiten elektrischen Eingangskontakt der elektrischen Eingangskontakte und die fünfte Parallelschaltung mit einem zweiten elektrischen Ausgangskontakt der elektrischen Ausgangskontakte elektrisch gekoppelt ist.

Vorzugsweise ist die erste Parallelschaltung an einem Eingang mit dem ersten elektrischen Eingangskontakt und die zweite Parallelschaltung an einem Ausgang mit dem ersten elektrischen Ausgangskontakt elektrisch verbunden. Weiterhin ist die vierte Parallelschaltung insbesondere an einem Eingang mit dem zweiten elektrischen Eingangskontakt und die fünfte Parallelschaltung an einem Ausgang mit dem zweiten elektrischen Ausgangskontakt verbunden.

Gemäß einer weiteren Ausführungsform umfasst der Ladestecker ferner einen ersten ohmschen-kapazitiven Stromteiler und einen zweiten ohmschen-kapazitiven Stromteiler, wobei der erste ohmsche-kapazitive Stromteiler als eine sechste Parallelschaltung ausgebildet ist, welche einen sechsten elektrischen Kondensator, einen sechsten elektrischen Widerstand und einen siebten elektrischen Widerstand umfasst, und wobei der zweite ohmsche-kapazitive Stromteiler als eine siebte Parallelschaltung ausgebildet ist, welche einen siebten elektrischen Kondensator, einen achten elektrischen Widerstand und einen neunten elektrischen Widerstand umfasst.

Die redundante Anordnung der vierten und fünften Parallelschaltung sowie der siebten Parallelschaltung ist insbesondere dafür ausgelegt, dass trotz und/oder bei Versagen eines einzelnen elektrischen Widerstandes eine Gesamtimpedanz des Spannungsteilers trotzdem geeignet ist, den Ableitstrom (Berührstrom) auf den erforderlichen Wert zu begrenzen. Dies hat den Vorteil, dass die Ausfallsicherheit der Schaltung, insbesondere der Schutzimpedanzvorrichtung, erhöht wird.

In einer weiteren Ausführungsform ist der ohmsche-kapazitive Spannungsteiler vorzugsweise zusätzlich differentiell aufgebaut. Das bedeutet, dass jeweils mit den elektrischen Eingangskontakten der erste differentielle Leiter (L+) und der zweite differentielle Leiter (L-) elektrisch verbunden sind.

Dies setzt voraus, dass die Gleichspannungspotentiale des ersten und des zweiten differentiellen Leiters nahezu symmetrisch sind, also die Spannungsdifferenz oder die Potentialdifferenz zu der Schutzerdung ungefähr 0V beträgt. Das ist beispielsweise dann der Fall, wenn der erste differentielle Leiter ein Potential von +400V zu der Schutzerdung aufweist und der zweite differentielle Leiter ein Potential von -400V zu der Schutzerdung aufweist. Hierbei handelt es sich auch insbesondere um eine symmetrische Signalübertragung.

Vorzugsweise sind die Widerstandswerte und die Kapazitätswerte der elektrischen Widerstände und der elektrischen Kondensatoren in der ersten, zweiten, vierten und fünften Parallelschaltung gleich. Auch können die Widerstandswerte und die Kapazitätswerte in der ersten, zweiten vierten und fünften Parallelschaltung unterschiedlich sein. Dies gilt auch für die Widerstandswerte und die Kapazitätswerte der elektrischen Widerstände und der elektrischen Kondensatoren in den ersten und zweiten ohmschen-kapazitiven Stromteilern.

Gemäß einer weiteren Ausführungsform umfasst das Ladekabel ferner einen weiteren elektrischen Leiter, welcher zumindest teilweise in dem Ladestecker angeordnet ist und welcher jeweils mit einem Ausgang der sechsten Parallelschaltung und einem Ausgang der siebten Parallelschaltung elektrisch verbunden ist, wobei ein Eingang der sechsten Parallelschaltung mit dem ersten elektrischen Ausgangskontakt der elektrischen Ausgangskontakte und ein Eingang der siebten Parallelschaltung mit dem zweiten elektrischen Ausgangskontakt der elektrischen Ausgangskontakte elektrisch gekoppelt ist.

Falls die Gleichspannungspotentiale vorzugsweise einseitig (unsymmetrisch) ausgebildet sind, also beispielsweise der erste differentielle Leiter ein Gleichspannungspotential von +400V (+400 Volt) zu der Schutzerdung aufweist, während der zweite differentielle Leiter ein Gleichspannungspotential von -10V (-10 Volt) zu der Schutzerdung aufweist, wird das Gleichspannungspotential des ersten und des zweiten differentiellen Leiters (L+, L-) durch den zweiten ohmschen-kapazitiven Spannungsteiler und durch den ersten und den zweiten ohmschen-kapazitiven Stromteiler jeweils separat mit dem weiteren elektrischen Leiter, nämlich insbesondere dem Schutzleiter, der mit der Schutzerdung verbunden ist, verbunden. Bei dieser Anordnung handelt es sich vorzugsweise um einen hochohmigen Spannungsteiler gegen die Schutzerdung.

Gemäß einer weiteren Ausführungsform ist die Schaltungsanordnung parallel zu einem Steckfeld des Ladesteckers angeordnet, wobei die Leistungsleitungen und die Messleitungen sowie der weitere elektrische Leiter des Ladekabels sich von einem Eingang des Ladesteckers durch die Schaltungsanordnung zu dem Steckfeld des Ladesteckers hin erstrecken und mit dem Steckfeld und der Schaltungsanordnung elektrisch verbunden sind.

Gemäß einer weiteren Ausführungsform sind die Leistungsleitungen und die Messleitungen sowie der weitere elektrische Leiter des Ladekabels mittels auf der Schaltungsanordnung angebrachten Kontaktfedern elektrisch mit der Schaltungsanordnung verbunden.

Das Steckfeld ist insbesondere eine kunststoffartige Form oder eine Schaltungsanordnung, welche von Kunststoff umfasst ist. Das Steckfeld ist vorzugsweise am gegenüberliegenden Ende des Eingangs des Ladesteckers angeordnet. Das Steckfeld umfasst beispielsweise ein Außenteil und ein Innenteil. Das Außenteil bildet die Verbindung nach außen, also zu der an dem Elektroauto angebrachten Ladekupplung, in welche der Ladestecker zum Laden des Akkumulators eingesteckt werden kann. Die Leitungen des Ladekabels erstrecken sich insbesondere durch die Schaltungsanordnung in das Innenteil des Steckfeldes im Ladestecker. Hierbei werden die Leitungen des Ladekabels vorzugsweise mittels elektrischer Klemmkontakte an dem Innenteil des Steckfeldes befestigt. Das Innenteil des Steckfeldes stellt nun insbesondere eine Verbindung von den Leitungen des Ladekabels zu dem Außenteil des Steckfeldes und des Ladesteckers bereit. Das Außenteil des Steckfeldes ist insbesondere der Teil des Ladesteckers, welcher mit der Ladekupplung an dem Elektrofahrzeug zum Laden des Akkumulators verbindbar ist. Ferner kann an dem Elektrofahrzeug der Ladestecker "männlich" ausgebildet sein, während der bewegbare Ladestecker, der zum Laden des Akkumulators verwendet wird, als Ladekupplung "weiblich" ausgebildet ist.

Vorzugsweise erstrecken sich von dem Ladekabel weitere Leitungen, welche in dem Ladekabel integriert sind, wie beispielsweise zumindest die CP- und die PP-Signalleitung, durch die Schaltungsanordnung zu dem Innenteil des Steckfeldes hin, welche ebenfalls eine elektrische Verbindung zwischen der Schaltungsanordnung und dem Innenteil des Steckfeldes aufweisen.

Die parallele Anordnung von Schaltungsanordnung und Innenteil des Steckfeldes in dem Ladestecker ermöglicht in vorteilhafter Weise eine besonders einfache Durchkontaktierung der Leitungen des Ladekabels durch die Schaltungsanordnung zu dem Innenteil des Steckfeldes.

Gemäß einer weiteren Ausführungsform sind die elektrischen Widerstände und die elektrischen Kondensatoren des ersten ohmschen-kapazitiven Spannungsteilers, des zweiten ohmschen-kapazitiven Spannungsteilers, des ersten ohmschen-kapazitiven Stromteilers und/oder des zweiten ohmschen-kapazitiven Stromteilers als oberflächenmontierte elektrische Bauelemente auf der Schaltungsanordnung auf einer Seite ausgebildet, welche gegenüber dem Eingang des Ladesteckers angeordnet ist.

Insbesondere sind die elektrischen Bauteile, welche die Schutzimpedanzvorrichtung ausbilden, wie beispielsweise die elektrischen Widerstände und die elektrischen Kondensatoren, als oberflächenmontierte Bauelemente (SMD; surface-mounted device) ausgeführt und werden unter Verwendung einer Oberflächenmontage (SMT; surface-mounting technology) auf der Schaltungsanordnung, wie beispielsweise der Leiterplatte, beispielswiese mittels Lot, angebracht. Weiterhin ist auf der Schaltungsanordnung vorzugsweise ein elektrischer Widerstand angeordnet, der ein CP- und ein PP-Signal mit der Schutzerdung verbindet, sobald ein Entriegelungstaster am Ladestecker betätigt wird.

Gemäß einem zweiten Aspekt wird ein System mit einem wie oben erläuterten Ladestecker sowie eine mit dem Ladestecker über das Ladekabel verbundene Ladeinfrastruktur vorgeschlagen.

Gemäß einer Ausführungsform des zweiten Aspekts ist die Ladeinfrastruktur dazu eingerichtet, mittels einer Strommess-Einheit einen elektrischen Strom in den Leistungsleitungen des Ladekabels und mittels einer Spannungsmess-Einheit eine elektrische Spannung über die Messleitungen des Ladekabels an den elektrischen Ausgangskontakten der Schaltungsanordnung zu messen, um eine elektrische Leistung zu berechnen.

Insbesondere handelt es sich bei den elektrischen Messleitungen um ein Paar von elektrischen Messleitungen, welche dazu verwendet werden, eine Verbindung zwischen einer Spannungsmess-Einheit, die insbesondere in der Ladeinfrastruktur angeordnet ist, und den Ausgangskontakten der Schaltungsanordnung herzustellen.

Vorzugsweise wird der elektrische Strom in einer der stromführenden Leistungsleitungen mittels der Strommess-Einheit innerhalb der Ladeinfrastruktur gemessen. Aus dem gemessenen Strom und der gemessen Spannung kann dann eine elektrische Leistung berechnet werden, mittels welcher anschließend eine elektrische Arbeit berechnet wird.

Die jeweilige Einheit, zum Beispiel die Strommess-Einheit oder die Spannungsmess-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem dritten Aspekt wird ein Verfahren zum Verarbeiten von elektrischen Größen für einen Ladestecker vorgeschlagen, welcher mittels eines elektrische Leistungsleitungen und elektrische Messleitungen umfassenden Ladekabels mit einer Ladeinfrastruktur verbindbar ist, und welcher eine Schaltungsanordnung aufweist, welche elektrische Eingangskontakte und elektrische Ausgangskontakte umfasst, wobei die elektrischen Eingangskontakte mit den elektrischen Leistungsleitungen und die elektrischen Ausgangskontakte mit den elektrischen Messleitungen elektrisch verbunden sind. Das Verfahren umfasst die Schritte:
Bereitstellen einer Schutzimpedanz mittels einer zwischen den Eingangskontakten und den Ausgangskontakten geschalteten Schutzimpedanzvorrichtung, und
Wandeln einer an den Eingangskontakten vorliegenden ersten elektrischen Größe mittels der bereitgestellten Schutzimpedanz in eine verringerte zweite elektrische Größe an den Ausgangskontakten.

Gemäß einem vierten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- FIG 1: zeigt eine schematische Darstellung eines Ausführungsbeispiels eines Innenraums eines Ladesteckers;
- FIG 2: zeigt eine schematische Darstellung eines Schaltplans eines ersten Ausführungsbeispiels einer Schutzimpedanzvorrichtung;
- FIG 3: zeigt eine schematische Darstellung eines Schaltplans eines zweiten Ausführungsbeispiels einer Schutzimpedanzvorrichtung;
- FIG 4: zeigt ein schematisches Blockdiagramm eines Systems mit einem Ladestecker; und
- FIG 5: zeigt ein schematisches Ablaufdiagramm eines Ausführungsbeispiels eines Verfahrens zum Verarbeiten von elektrischen Größen für einen Ladestecker.

In den Figuren sind gleiche oder funktionsgleiche Elemente mit denselben Bezugszeichen versehen worden, sofern nichts anderes angegeben ist.

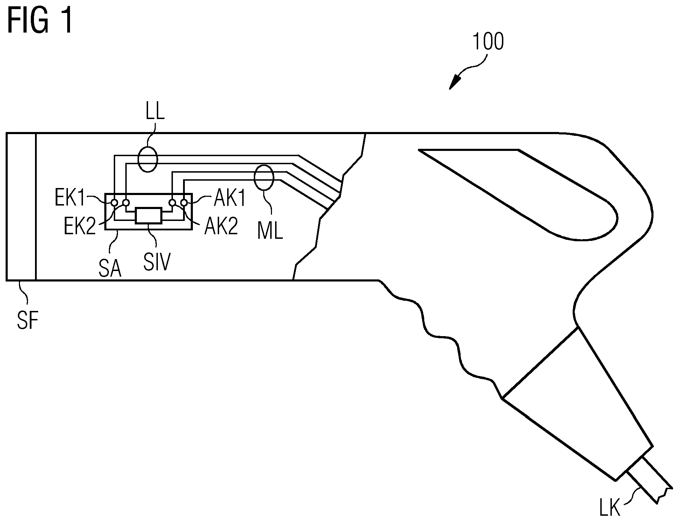

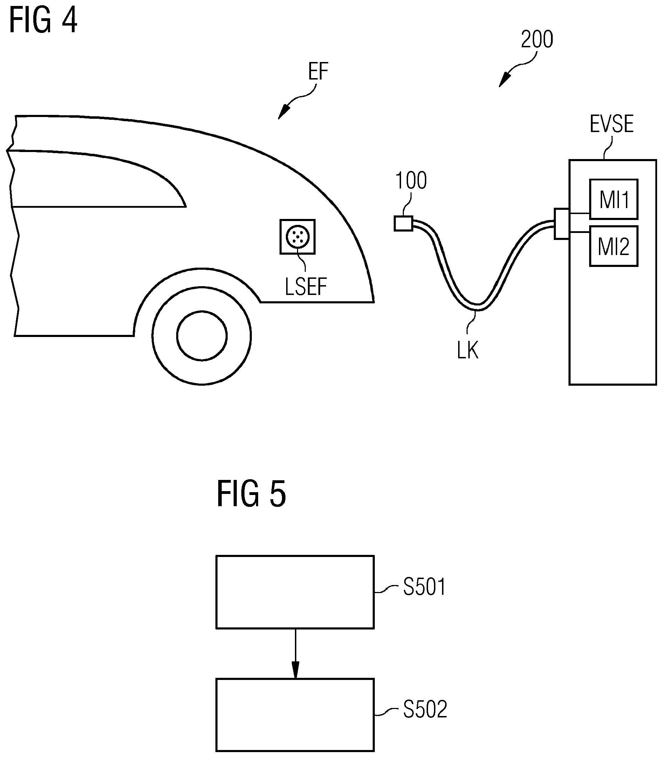

FIG 1 zeigt eine schematische Darstellung eines Ausführungsbeispiels eines Innenraums eines Ladesteckers 100 zum Laden eines Stromspeichers eines elektrisch antreibbaren Fortbewegungsmittels EF (siehe FIG 4). Der Ladestecker 100 ist mittels eines elektrische Leistungsleitungen LL und elektrische Messleitungen ML umfassenden Ladekabels LK mit einer Ladeinfrastruktur EVSE (siehe FIG 4) verbindbar.

Der Ladestecker 100 umfasst insbesondere eine Schaltungsanordnung SA, welche elektrische Eingangskontakte EK1, EK2 und elektrische Ausgangskontakte AK1, AK2 aufweist. Die elektrischen Eingangskontakte EK1, EK2 sind mit den elektrischen Leistungsleitungen LL elektrisch verbunden. Die elektrischen Ausgangskontakte AK1, AK2 sind ferner mit den elektrischen Messleitungen ML elektrisch verbunden.

Zusätzlich umfasst der Ladestecker 100 eine zwischen den elektrischen Eingangskontakten EK1, EK2 und den elektrischen Ausgangskontakten AK1, AK2 geschaltete Schutzimpedanzvorrichtung SIV. Die Schutzimpedanzvorrichtung SIV ist dazu eingerichtet, eine Schutzimpedanz bereitzustellen. Insbesondere ist die Schutzimpedanzvorrichtung SIV dabei dazu eingerichtet, eine an den elektrischen Eingangskontakten EK1, EK2 vorliegende erste elektrische Größe mittels der bereitgestellten Schutzimpedanz in eine verringerte zweite elektrische Größe an den elektrischen Ausgangskontakten AK1, AK2 zu wandeln.

Vorzugsweise sind die erste elektrische Größe und die verringerte zweite elektrische Größe als elektrische Spannungen ausgebildet.

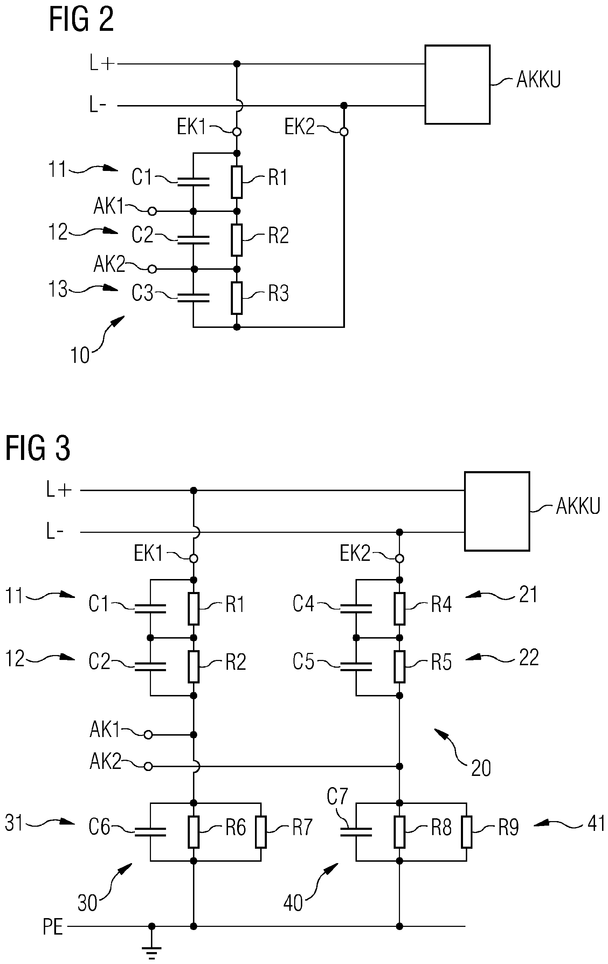

Insbesondere ist in einem nicht in den Figuren dargestellten Beispiel die Schaltungsanordnung SA parallel zu einem Steckfeld SF des Ladesteckers 100 angeordnet. Hierbei erstrecken sich die Leistungsleitungen LL und die Messleitungen ML sowie ein weiterer elektrischer Leiter PE (siehe FIG 3) des Ladekabels LK von einem Eingang des Ladesteckers 100 durch die Schaltungsanordnung SA zu dem Steckfeld SF des Ladesteckers 100 hin und sind mit dem Steckfeld SF und der Schaltungsanordnung SA elektrisch verbunden.

Beispielsweise sind die Leistungsleitungen LL und die Messleitungen ML sowie der weitere elektrische Leiter PE des Ladekabels LK mittels auf der Schaltungsanordnung SA angebrachten Kontaktfedern elektrisch mit der Schaltungsanordnung SA verbunden.

FIG 2 zeigt eine schematische Darstellung eines Schaltplans eines ersten Ausführungsbeispiels einer Schutzimpedanzvorrichtung SIV.

Hierbei ist die Schutzimpedanzvorrichtung SIV als ein erster ohmscher-kapazitiver Spannungsteiler 10 ausgebildet.

Der ohmsche-kapazitive Spannungsteiler 10 umfasst vorzugsweise eine erste Parallelschaltung 11 eines ersten elektrischen Widerstands R1 und eines ersten elektrischen Kondensators C1 und eine zweite Parallelschaltung 12 eines zweiten elektrischen Widerstands R2 und eines zweiten elektrischen Kondensators C2.

Weiterhin weist der ohmsche-kapazitiver Spannungsteiler 10 eine dritte Parallelschaltung 13 eines dritten elektrischen Widerstands R3 und eines dritten elektrischen Kondensators C3 auf. Die erste Parallelschaltung 11 ist in Reihe zu der zweiten Parallelschaltung 12 angeordnet und die zweite Parallelschaltung 12 ist in Reihe zu der dritten Parallelschaltung 13 angeordnet.

Ferner ist in FIG 2 gezeigt, dass die erste Parallelschaltung 11 zwischen einem ersten elektrischen Eingangskontakt EK1 der elektrischen Eingangskontakte und einem ersten elektrischen Ausgangskontakt AK1 der elektrischen Ausgangskontakte elektrisch gekoppelt ist. Überdies ist die zweite Parallelschaltung 12 zwischen dem ersten elektrischen Ausgangskontakt AK1 der elektrischen Ausgangskontakte und einem zweiten elektrischen Ausgangskontakt AK2 der elektrischen Ausgangskontakte elektrisch gekoppelt.

Zusätzlich ist in FIG 2 dargestellt, dass die dritte Parallelschaltung 13 zwischen einem zweiten elektrischen Eingangskontakt EK2 der elektrischen Eingangskontakte und dem zweiten elektrischen Ausgangskontakt AK2 der elektrischen Ausgangskontakte elektrisch gekoppelt ist.

Daneben ist eine erste differentielle Leistungsleitung L+ mit dem ersten elektrischen Eingangskontakt EK1 direkt in der Schaltungsanordnung SA mittels einer elektrischen Klemme oder über eine weitere Leitung elektrisch verbunden. Ferner ist eine zweite differentielle Leistungsleitung L- mit dem zweiten elektrischen Eingangskontakt EK2 direkt in der Schaltungsanordnung SA mittels einer elektrischen Klemme oder über eine weitere Leitung elektrisch verbunden. Die differentiellen Leistungsleitungen L+ und L- sind zum Laden eines Akkumulators AKKU elektrisch mit diesem verbunden.

FIG 3 zeigt eine schematische Darstellung eines Schaltplans eines zweiten Ausführungsbeispiels einer Schutzimpedanzvorrichtung SIV.

Die Schutzimpedanzvorrichtung SIV ist hierbei als ein zweiter ohmscher-kapazitiver Spannungsteiler 20 ausgebildet ist.

Der zweite ohmsche-kapazitive Spannungsteiler 20 umfasst eine erste Parallelschaltung 11 eines ersten elektrischen Widerstands R1 und eines ersten elektrischen Kondensators C1 sowie eine zweite Parallelschaltung 12 eines zweiten elektrischen Widerstands R2 und eines zweiten elektrischen Kondensators C2.

Ferner weist der zweite ohmsche-kapazitive Spannungsteiler 20 eine vierte Parallelschaltung 21 eines vierten elektrischen Widerstands R4 und eines vierten elektrischen Kondensators C4 und eine fünfte Parallelschaltung 22 eines fünften elektrischen Widerstands R5 und eines fünften elektrischen Kondensators C5 auf. Dabei ist die erste Parallelschaltung 11 in Reihe zu der zweiten Parallelschaltung 12 angeordnet, während die vierte Parallelschaltung 21 in Reihe zu der fünften Parallelschaltung 22 angeordnet ist.

Auch ist in FIG 3 dargestellt, dass die erste Parallelschaltung 11 mit einem ersten elektrischen Eingangskontakt EK1 der elektrischen Eingangskontakte und die zweite Parallelschaltung 12 mit einem ersten elektrischen Ausgangskontakt AK1 der elektrischen Ausgangskontakte elektrisch gekoppelt ist. Die vierte Parallelschaltung 21 hingegen ist mit einem zweiten elektrischen Eingangskontakt EK2 der elektrischen Eingangskontakte und die fünfte Parallelschaltung 22 mit einem zweiten elektrischen Ausgangskontakt AK2 der elektrischen Ausgangskontakte elektrisch gekoppelt.

Zusätzlich umfasst der Ladestecker 100 (siehe FIG 1) ferner einen ersten ohmschen-kapazitiven Stromteiler 30 und einen zweiten ohmschen-kapazitiven Stromteiler 40.

Der erste ohmsche-kapazitive Stromteiler 30 ist als eine sechste Parallelschaltung 31 ausgebildet, welche einen sechsten elektrischen Kondensator C6, einen sechsten elektrischen Widerstand R6 und einen siebten elektrischen Widerstand R7 umfasst. Der zweite ohmsche-kapazitive Stromteiler 40 ist als eine siebte Parallelschaltung 41 ausgebildet, welche einen siebten elektrischen Kondensator C7, einen achten elektrischen Widerstand R8 und einen neunten elektrischen Widerstand R9 umfasst.

FIG 3 zeigt außerdem, dass das Ladekabel LK (siehe FIG 4) einen weiteren elektrischen Leiter PE umfasst, welcher zumindest teilweise in dem Ladestecker 100 (siehe FIG 1) angeordnet ist und welcher jeweils mit einem Ausgang der sechsten Parallelschaltung 31 und einem Ausgang der siebten Parallelschaltung 41 elektrisch verbunden ist. Hierbei ist ein Eingang der sechsten Parallelschaltung 31 mit dem ersten elektrischen Ausgangskontakt AK1 der elektrischen Ausgangskontakte und ein Eingang der siebten Parallelschaltung 41 mit dem zweiten elektrischen Ausgangskontakt AK2 der elektrischen Ausgangskontakte elektrisch gekoppelt.

Die elektrischen Widerstände und die elektrischen Kondensatoren des ersten ohmschen-kapazitiven Spannungsteilers 10, des zweiten ohmschen-kapazitiven Spannungsteilers 20, des ersten ohmschen-kapazitiven Stromteilers 30 und/oder des zweiten ohmschen-kapazitiven Stromteilers 40 sind als oberflächenmontierte elektrische Bauelemente auf der Schaltungsanordnung SA auf einer Seite ausgebildet, welche gegenüber dem Eingang des Ladesteckers 100 angeordnet ist.

FIG 4 zeigt eine schematisches Blockdiagramm eines Systems 200 mit dem Ladestecker 100 sowie eine mit dem Ladestecker 100 über das Ladekabel LK verbundene Ladeinfrastruktur EVSE. Die Ladeinfrastruktur EVSE ist insbesondere dazu eingerichtet, mittels einer Strommess-Einheit MI1 einen elektrischen Strom in den Leistungsleitungen LL des Ladekabels LK und mittels einer Spannungsmess-Einheit MI2 eine elektrische Spannung über die Messleitungen ML des Ladekabels an den elektrischen Ausgangskontakten AK1, AK2 der Schaltungsanordnung SA zu messen, um eine elektrische Leistung zu berechnen.

FIG 5 zeigt ein schematisches Ablaufdiagramm eines Ausführungsbeispiels eines Verfahrens zum Verarbeiten von elektrischen Größen für einen Ladestecker 100. Ausführungsbeispiele und Details des Ladesteckers 100 sind in den FIG 1 bis 4 gezeigt.

Der in FIG 5 nicht dargestellte Ladestecker 100 ist insbesondere mittels eines elektrische Leistungsleitungen LL und elektrische Messleitungen ML umfassenden Ladekabels LK mit einer Ladeinfrastruktur EVSE verbindbar (siehe FIG 4).

Der Ladestecker 100 umfasst ferner eine Schaltungsanordnung SA, welche elektrische Eingangskontakte EK1, EK2 und elektrische Ausgangskontakte AK1, AK2 aufweist. Vorzugsweise sind die elektrischen Eingangskontakte EK1, EK2 mit den elektrischen Leistungsleitungen LL und die elektrischen Ausgangskontakte EK1, EK2 mit den elektrischen Messleitungen ML elektrisch verbunden.

Das Ausführungsbeispiel der FIG 5 weist die Verfahrensschritte S501 und S502 auf:
In dem Schritt S501 wird eine Schutzimpedanz mittels einer zwischen den elektrischen Eingangskontakten EK1, EK2 und den elektrischen Ausgangskontakten AK1, AK2 geschalteten Schutzimpedanzvorrichtung SIV bereitgestellt.

In dem Schritt S502 wird eine an den elektrischen Eingangskontakten EK1, EK2 vorliegende erste elektrische Größe mittels der bereitgestellten Schutzimpedanz in eine verringerte zweite elektrische Größe an den elektrischen Ausgangskontakten AK1, AK2 gewandelt.

Obwohl die vorliegende Erfindung anhand von Ausführungsbeispielen beschrieben wurde, ist sie vielfältig modifizierbar.

## Patentansprüche

1. Ladestecker (100) zum Laden eines Stromspeichers eines elektrisch antreibbaren Fortbewegungsmittels (EF), wobei der Ladestecker (100) mittels eines elektrische Leistungsleitungen (LL) und elektrische Messleitungen (ML) umfassenden Ladekabels (LK) mit einer Ladeinfrastruktur (EVSE) verbindbar ist, wobei der Ladestecker (100) umfasst:
eine Schaltungsanordnung (SA), welche elektrische Eingangskontakte (EK1, EK2) und elektrische Ausgangskontakte (AK1, AK2) umfasst, wobei die elektrischen Eingangskontakte (EK1, EK2) mit den elektrischen Leistungsleitungen (LL) und die elektrischen Ausgangskontakte (AK1, AK2) mit den elektrischen Messleitungen (ML) elektrisch verbunden sind, und
eine zwischen den elektrischen Eingangskontakten (EK1, EK2) und den elektrischen Ausgangskontakten (AK1, AK2) geschaltete Schutzimpedanzvorrichtung (SIV) zur Bereitstellung einer Schutzimpedanz, welche dazu eingerichtet ist, eine an den elektrischen Eingangskontakten (EK1, EK2) vorliegende erste elektrische Größe mittels der bereitgestellten Schutzimpedanz in eine verringerte zweite elektrische Größe an den elektrischen Ausgangskontakten (AK1, AK2) zu wandeln.

2. Ladestecker nach Anspruch 1, **dadurch gekennzeichnet, dass** die erste elektrische Größe und die verringerte zweite elektrische Größe als elektrische Spannungen ausgebildet sind.

3. Ladestecker nach Anspruch 1 oder 2, **dadurch gekennzeichnet, dass** die Schutzimpedanzvorrichtung (SIV) als ein erster ohmscher-kapazitiver Spannungsteiler (10) ausgebildet ist, welcher eine erste Parallelschaltung (11) eines ersten elektrischen Widerstands (R1) und eines ersten elektrischen Kondensators (C1), eine zweite Parallelschaltung (12) eines zweiten elektrischen Widerstands (R2) und eines zweiten elektrischen Kondensators (C2) und eine dritte Parallelschaltung (13) eines dritten elektrischen Widerstands (R3) und eines dritten elektrischen Kondensators (C3) umfasst, wobei die erste Parallelschaltung (11) in Reihe zu der zweiten Parallelschaltung (12) angeordnet ist und die zweite Parallelschaltung (12) in Reihe zu der dritten Parallelschaltung (13) angeordnet ist.

4. Ladestecker nach Anspruch 3, **dadurch gekennzeichnet, dass** die erste Parallelschaltung (11) zwischen einem ersten elektrischen Eingangskontakt (EK1) der elektrischen Eingangskontakte und einem ersten elektrischen Ausgangskontakt (AK1) der elektrischen Ausgangskontakte elektrisch gekoppelt ist, dass die zweite Parallelschaltung (12) zwischen dem ersten elektrischen Ausgangskontakt (AK1) der elektrischen Ausgangskontakte und einem zweiten elektrischen Ausgangskontakt (AK2) der elektrischen Ausgangskontakte elektrisch gekoppelt ist und dass die dritte Parallelschaltung (13) zwischen einem zweiten elektrischen Eingangskontakt (EK2) der elektrischen Eingangskontakte und dem zweiten elektrischen Ausgangskontakt (AK2) der elektrischen Ausgangskontakte elektrisch gekoppelt ist.

5. Ladestecker nach Anspruch 1 oder 2, **dadurch gekennzeichnet, dass** die Schutzimpedanzvorrichtung (SIV) als ein zweiter ohmscher-kapazitiver Spannungsteiler (20) ausgebildet ist, welcher eine erste Parallelschaltung (11) eines ersten elektrischen Widerstands (R1) und eines ersten elektrischen Kondensators (C1), eine zweite Parallelschaltung (12) eines zweiten elektrischen Widerstands (R2) und eines zweiten elektrischen Kondensators (C2), eine vierte Parallelschaltung (21) eines vierten elektrischen Widerstands (R4) und eines vierten elektrischen Kondensators (C4) und eine fünfte Parallelschaltung (22) eines fünften elektrischen Widerstands (R5) und eines fünften elektrischen Kondensators (C5) umfasst, wobei die erste Parallelschaltung (11) in Reihe zu der zweiten Parallelschaltung (12) angeordnet ist und die vierte Parallelschaltung (21) in Reihe zu der fünften Parallelschaltung (22) angeordnet ist.

6. Ladestecker nach Anspruch 5, **dadurch gekennzeichnet, dass** die erste Parallelschaltung (11) mit einem ersten elektrischen Eingangskontakt (EK1) der elektrischen Eingangskontakte und die zweite Parallelschaltung (12) mit einem ersten elektrischen Ausgangskontakt (AK1) der elektrischen Ausgangskontakte elektrisch gekoppelt ist, wobei die vierte Parallelschaltung (21) mit einem zweiten elektrischen Eingangskontakt (EK2) der elektrischen Eingangskontakte und die fünfte Parallelschaltung (22) mit einem zweiten elektrischen Ausgangskontakt (AK2) der elektrischen Ausgangskontakte elektrisch gekoppelt ist.

7. Ladestecker nach Anspruch 6, **dadurch gekennzeichnet, dass** der Ladestecker (100) ferner einen ersten ohmschen-kapazitiven Stromteiler (30) und einen zweiten ohmschen-kapazitiven Stromteiler (40) umfasst, wobei der erste ohmsche-kapazitive Stromteiler (30) als eine sechste Parallelschaltung (31) ausgebildet ist, welche einen sechsten elektrischen Kondensator (C6), einen sechsten elektrischen Widerstand (R6) und einen siebten elektrischen Widerstand (R7) umfasst, und wobei der zweite ohmsche-kapazitive Stromteiler (40) als eine siebte Parallelschaltung (41) ausgebildet ist, welche einen siebten elektrischen Kondensator (C7), einen achten elektrischen Widerstand (R8) und einen neunten elektrischen Widerstand (R9) umfasst.

8. Ladestecker nach Anspruch 7, **dadurch gekennzeichnet, dass** das Ladekabel (LK) ferner einen weiteren elektrischen Leiter (PE) umfasst, welcher zumindest teilweise in dem Ladestecker (100) angeordnet ist und welcher jeweils mit einem Ausgang der sechsten Parallelschaltung (31) und einem Ausgang der siebten Parallelschaltung (41) elektrisch verbunden ist, wobei ein Eingang der sechsten Parallelschaltung (31) mit dem ersten elektrischen Ausgangskontakt (AK1) der elektrischen Ausgangskontakte und ein Eingang der siebten Parallelschaltung (41) mit dem zweiten elektrischen Ausgangskontakt (AK2) der elektrischen Ausgangskontakte elektrisch gekoppelt ist.

9. Ladestecker nach Anspruch 8, **dadurch gekennzeichnet, dass** die Schaltungsanordnung (SA) parallel zu einem Steckfeld (SF) des Ladesteckers (100) angeordnet ist, wobei die Leistungsleitungen (LL) und die Messleitungen (ML) sowie der weitere elektrische Leiter (PE) des Ladekabels (LK) sich von einem Eingang des Ladesteckers (100) durch die Schaltungsanordnung (SA) zu dem Steckfeld (SF) des Ladesteckers (100) hin erstrecken und mit dem Steckfeld (SF) und der Schaltungsanordnung (SA) elektrisch verbunden sind.

10. Ladestecker nach Anspruch 9, **dadurch gekennzeichnet, dass** die Leistungsleitungen (LL) und die Messleitungen (ML) sowie der weitere elektrische Leiter (PE) des Ladekabels (LK) mittels auf der Schaltungsanordnung (SA) angebrachten Kontaktfedern elektrisch mit der Schaltungsanordnung (SA) verbunden sind.

11. Ladestecker nach einem der Ansprüche 3 bis 10, **dadurch gekennzeichnet, dass** die elektrischen Widerstände und die elektrischen Kondensatoren des ersten ohmschen-kapazitiven Spannungsteilers (10), des zweiten ohmschen-kapazitiven Spannungsteilers (20), des ersten ohmschen-kapazitiven Stromteilers (30) und/oder des zweiten ohmschen-kapazitiven Stromteilers (40) als oberflächenmontierte elektrische Bauelemente auf der Schaltungsanordnung (SA) auf einer Seite ausgebildet sind, welche gegenüber dem Eingang des Ladesteckers (100) angeordnet ist.

12. System (200) mit einem Ladestecker (100) nach einem der Ansprüche 1 bis 11 sowie eine mit dem Ladestecker (100) über das Ladekabel (LK) verbundene Ladeinfrastruktur (EVSE).

13. System nach Anspruch 12, **dadurch gekennzeichnet, dass** die Ladeinfrastruktur (EVSE) dazu eingerichtet ist, mittels einer Strommess-Einheit (MI1) einen elektrischen Strom in den Leistungsleitungen (LL) des Ladekabels (LK) und mittels einer Spannungsmess-Einheit (MI2) eine elektrische Spannung über die Messleitungen (ML) des Ladekabels (LK) an den elektrischen Ausgangskontakten (AK1, AK2) der Schaltungsanordnung (SA) zu messen, um eine elektrische Leistung zu berechnen.

14. Verfahren zum Verarbeiten von elektrischen Größen für einen Ladestecker (100), welcher mittels eines elektrische Leistungsleitungen (LL) und elektrische Messleitungen (ML) umfassenden Ladekabels (LK) mit einer Ladeinfrastruktur (EV-SE) verbindbar ist, und welcher eine Schaltungsanordnung (SA) aufweist, welche elektrische Eingangskontakte (EK1, EK2) und elektrische Ausgangskontakte (AK1, AK2) umfasst, wobei die elektrischen Eingangskontakte (EK1, EK2) mit den elektrischen Leistungsleitungen (LL) und die elektrischen Ausgangskontakte (EK1, EK2) mit den elektrischen Messleitungen (ML) elektrisch verbunden sind, mit den Schritten:
Bereitstellen (S501) einer Schutzimpedanz mittels einer zwischen den elektrischen Eingangskontakten (EK1, EK2) und den elektrischen Ausgangskontakten (AK1, AK2) geschalteten Schutzimpedanzvorrichtung (SIV), und
Wandeln (S502) einer an den elektrischen Eingangskontakten (EK1, EK2) vorliegenden ersten elektrischen Größe mittels der bereitgestellten Schutzimpedanz in eine verringerte zweite elektrische Größe an den elektrischen Ausgangskontakten (AK1, AK2).

15. Computerprogrammprodukt, welches auf einer programmgesteuerten Einrichtung die Durchführung des Verfahrens gemäß Anspruch 14 veranlasst.
